# EUROPÄISCHE PATENTSCHRIFT

(11) **EP 3 585 634 B1**
(45) Veröffentlichungstag und Bekanntmachung des Hinweises auf die Patenterteilung: **09.03.2022**
(21) Anmeldenummer: 18704154.6
(22) Anmeldetag: 24.01.2018
(51) Int. Cl.: B60G 17/052, B60T 17/00, B60T 13/66, B60T 13/68

(54) **DRUCKLUFTVERSORGUNGSANLAGE, PNEUMATISCHES SYSTEM UND VERFAHREN ZUM BETREIBEN EINER DRUCKLUFTVERSORGUNGSANLAGE BZW. EINES PNEUMATISCHEN SYSTEMS**
COMPRESSED-AIR SUPPLY INSTALLATION, PNEUMATIC SYSTEM, AND METHOD FOR OPERATING A COMPRESSED-AIR SUPPLY INSTALLATION OR A PNEUMATIC SYSTEM
INSTALLATION D'ALIMENTATION EN AIR COMPRIMÉ, SYSTÈME PNEUMATIQUE ET PROCÉDÉ PERMETTANT DE FAIRE FONCTIONNER UNE TELLE INSTALLATION OU UN TEL SYSTÈME

(30) Priorität: 22.02.2017 DE 102017001710
(43) Veröffentlichungstag der Anmeldung: 01.01.2020
(73) Patentinhaber: ZF CV Systems Europe BV, 1170 Brussels (BE)
(72) Erfinder: EGGEBRECHT, Detlev, 30519 Hannover (DE)
(74) Vertreter: Rabe, Dirk-Heinrich
(86) Internationale Anmeldenummer: PCT/EP2018/051622
(87) Internationale Veröffentlichungsnummer: WO 2018/153597

(56) Entgegenhaltungen:
- WO-A1-2016/026577
- DE-A1-102012 001 734
- DE-A1-102012 001 736

## Beschreibung

Druckluftversorgungsanlage, pneumatisches System und Verfahren zum Betreiben einer Druckluftversorgungsanlage bzw. eines pneumatischen Systems.

Die Erfindung betrifft eine Druckluftversorgungsanlage gemäß dem Oberbegriff des Anspruchs 1. Die Erfindung betrifft auch ein pneumatisches System mit einer solchen Druckluftversorgungsanlage. Weiter betrifft die Erfindung ein Verfahren zum Steuern einer Druckluftversorgungsanlage, insbesondere zum Betreiben einer Pneumatikanlage.

Eine Druckluftversorgungsanlage wird in Fahrzeugen aller Art, insbesondere zur Versorgung einer Luftfederanlage eines Fahrzeugs mit Druckluft, eingesetzt. Luftfederanlagen können auch Niveauregelungseinrichtungen umfassen, mit denen der Abstand zwischen Fahrzeugachse und Fahrzeugaufbau eingestellt werden kann. Eine Luftfederanlage eines eingangs genannten pneumatischen Systems umfasst eine Anzahl von an einer gemeinsamen Leitung (Galerie) pneumatisch angeschlossenen Luftbälgen, die mit zunehmender Befüllung den Fahrzeugaufbau anheben und entsprechend mit abnehmender Befüllung absenken können. Mit wachsendem Abstand zwischen Fahrzeugachse und Fahrzeugaufbau bzw. wachsender Bodenfreiheit werden die Federwege länger und auch größere Bodenunebenheiten können überwunden werden, ohne dass es zu einer Berührung mit dem Fahrzeugaufbau kommt. Solche Systeme werden in Geländefahrzeugen und Sport Utility Vehicles (SUV) eingesetzt. Insbesondere bei SUVs ist es bei sehr leistungsfähigen Motoren wünschenswert, das Fahrzeug einerseits für hohe Geschwindigkeiten auf der Straße mit vergleichsweise geringer Bodenfreiheit zu versehen und andererseits für das Gelände mit einer vergleichsweise großen Bodenfreiheit zu versehen. Es ist weiter wünschenswert, eine Veränderung der Bodenfreiheit möglichst schnell umzusetzen, was die Anforderung hinsichtlich Schnelligkeit, Flexibilität und Verlässlichkeit einer Druckluftversorgungsanlage erhöht.

Eine Druckluftversorgungsanlage zur Verwendung in einem pneumatischen System mit einer Pneumatikanlage, beispielsweise einer zuvor beschriebenen Luftfederanlage, wird mit Druckluft aus einer Druckluftzuführung, beispielsweise im Rahmen eines Druckniveaus von 5 bis 20 bar, betrieben. Die Druckluft wird mittels eines Luftverdichters, mit beispielsweise einem Kompressor oder gegebenenfalls einem zweistufigen Kompressor, der Druckluftzuführung zur Verfügung gestellt. Die Druckluftzuführung ist zur Versorgung der Pneumatikanlage mit einem Druckluftanschluss pneumatisch verbunden und andererseits mit einem Entlüftungsanschluss pneumatisch verbunden. Über ein Entlüftungsventil kann durch Ablassen von Luft in einem oder mehreren Entlüftungsanschlüssen die Druckluftversorgungsanlage zur Umgebung hin entlüftet werden.

Zur Sicherstellung eines langfristigen Betriebs der Druckluftversorgungsanlage und/oder der Pneumatikanlage weist diese einen Lufttrockner auf, mit dem die dem System zuzuführende Druckluft zu trocknen ist. Dadurch wird die Ansammlung von Feuchtigkeit im Pneumatiksystem vermieden, was anderenfalls bei vergleichsweise niedrigen Temperaturen zu ventilschädigender Kristallbildung führen könnte und darüber hinaus zu ungewünschten Defekten in der Druckluftversorgungsanlage und in der Pneumatikanlage. Ein Lufttrockner weist ein Trockenmittel auf, üblicherweise eine Granulatschüttung, welche von der Druckluft durchströmbar ist, so dass die Granulatschüttung --bei vergleichsweise hohem Druck-- die in der Druckluft enthaltene Feuchtigkeit durch Adsorption aufnehmen kann. Ein Lufttrockner kann gegebenenfalls als regenerativer Lufttrockner ausgelegt werden. Dies kann dadurch geschehen, dass die Granulatschüttung bei jedem Entlüftungszyklus --bei vergleichsweise niedrigem Druck-- mit der getrockneten Druckluft aus dem Luftfederungssystem im Gegenstrom oder Gleichstrom relativ zur Befüllrichtung durchströmt wird. Dazu kann das Entlüftungsventil geöffnet werden. Für eine solche -- auch als Druckwechseladsorption bezeichnete -- Anwendung hat es sich als wünschenswert erwiesen, eine Druckluftversorgungsanlage flexibel und gleichzeitig verlässlich auszulegen, insbesondere eine vergleichsweise schnelle Entlüftung mit einem dennoch für eine Regeneration des Lufttrockners ausreichendem Druckwechsel zu ermöglichen.

Bei manchen Fahrzeugen ist es bauartbedingt erforderlich beim Entlüften der Luftbälge einen Restdruck zu behalten, der durchaus im Bereich von 1 bis 3 bar liegen kann. Bei anderen Fahrzeugen, insbesondere solchen mit einer sogenannten Liftachse, ist es bauartbedingt erforderlich, dass die Luftbälge restlos auf 0 bar entleert werden. Die erwähnten Drücke sind als Relativdrücke (relativ zum Atmosphärendruck) zu verstehen.

Druckluftversorgungsanlagen zum Betreiben einer Luftfederanlage eines Fahrzeugs sind beispielsweise aus der DE 10 2012 001 734 A9 und der DE 10 2012 001 736 A9 bekannt.

Die WO 2016/026577 A1 offenbart in Fig. 3 eine Druckluftversorgungsanlage nach dem Oberbegriff des Anspruchs 1 zum Betreiben eines pneumatischen Systems, mit einer Druckluftzuführung, einem Druckluftanschluss zu einer Pneumatikanlage und einem Entlüftungsanschluss oder einen weiteren Entluftungsanschluss zur Umgebung, wobei zwischen der Druckluftzuführung und dem Druckluftanschluss eine Pneumatikhauptleitung und zwischen dem Druckluftanschluss und dem Entluftungsanschluss eine Entlüftungsleitung mit einem über einen ersten und einen zweiten Entlüftungsventilanschluss angeschlossenen Entlüftungsventil gebildet ist, wobei das Entlüftungsventil zusätzlich einen Steueranschluss aufweist, der mittels einer pneumatischen Steuerrelaisleitung in pneumatischer Verbindung mit einem Steuerventil verbunden ist, und das Entlüftungsventil einem ersten und zweiten Schaltzustand aufweist, und das Steuerventil einem ersten und zweiten Schaltzustand aufweist und in Form eines 2/2-Wegeventils gebildet ist, wobei die pneumatische Steuerleitung mittels einerZusatzentlüftungsleitung in dem ersten und/oder zweiten Schaltzustand des Entlüftungsventils mit dem Entlüftungsanschluss und/oder einen weiteren Entlüftungsanschluss verbunden ist.

An dieser Stelle setzt die Erfindung an, deren Aufgabe es ist, eine Vorrichtung, insbesondere eine Druckluftversorgungsanlage und ein pneumatisches System mit einer Druckluftversorgungsanlage, anzugeben, die -- aufbauend auf eine Ventilanordnung mit einem Steuerventil und einem Entlüftungsventil -- eine verbesserte Funktionalität, insbesondere eine verbesserte Entlüftungsfunktionalität zur Verfügung stellt. Aufgabe der Erfindung ist es auch, ein geeignetes Verfahren zum Betrieb, insbesondere Steuerung, der Druckluftversorgungsanlage und/oder der Pneumatikanlage anzugeben.

Bezüglich der Druckluftversorgungsanlage wird die Aufgabe, ausgehend von einer Druckluftversorgungsanlage der eingangs genannten Art dadurch gelöst, dass dem Steuerventil ein Steuerventil-Entlüftungs-Anschluss zugeordnet ist, der über das Entlüftungsventil schaltbar mit dem Entlüftungsanschluss oder einem Umgebungsanschluss verbindbar und über das Entlüftungsventil schaltbar von dem Entlüftungsanschluss oder dem Umgebungsanschluss trennbar ist. Vorzugsweise weist das Steuerventil den Steuerventil-Entlüftungs-Anschluss auf.

Mit anderen Worten ist der Steuerventil-Entlüftungs-Anschluss nicht dauerhaft mit dem Entlüftungsanschluss oder dem Umgebungsanschluss verbunden. Vielmehr ist eine pneumatische Verbindung zwischen Steuer- Entlüftungs-Anschluss und Entlüftungsanschluss oder Umgebungsanschluss über das Entlüftungsventil schaltbar, bzw. von einem Schaltzustand des Entlüftungsventils abhängig.

Die Erfindung geht von der Überlegung aus, dass sich die eingangs genannte Ventilanordnung mit einem Steuerventil zur Steuerung eines Entlüftungsventils bei einer Druckluftversorgungsanlage jedenfalls grundsätzlich bewährt hat. Die erfindungsgemäße Druckluftversorgungsanlage hat den Vorteil, dass mittels des Steuerventils der Steuerraum des Entlüftungsventils belüftet, ein Steuerdruck gezielt eingeschlossen und entlüftet werden kann.

Bevorzugte Weiterbildungen der Erfindung sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren.

Es hat sich als vorteilhaft herausgestellt, wenn das Steuerventil als 3/2-Wegeventil ausgebildet ist. Vorzugsweise ist der Steuerventil-Entlüftungs-Anschluss über eine Steuer-Entlüftungsleitung mit dem einen Entlüftungsventil verbunden. Vorzugsweise verfügt das Entlüftungsventil über einen Entlüftungseingangsanschluss, an dem die Steuer-Entlüftungsleitung angeschlossen ist. Vorzugsweise ist das Steuerventil ein Magnetventil.

Das Entlüftungsventil kann einen vom Drucksteueranschluss verschiedenen Entlüftungseingangsanschluss aufweisen, der druckunabhängig mit dem Steuerventil-Entlüftungs-Anschluss verbunden ist.

Es hat sich als vorteilhaft herausgestellt, wenn die Steuer-Entlüftungsleitung eine Drossel aufweist. Vorzugsweise ist die Drossel dem Entlüftungseingangsanschluss des Entlüftungsventils vorgeschaltet.

In einer bevorzugten Ausführungsform ist der Entlüftungseingangsanschluss als Zusatzventilsitz ausgebildet. Das Entlüftungsventil kann einen Kolben aufweisen, der vorzugsweise mit einem daran angeordneten Verschlusskörper ausgestattet ist. Über den Verschlusskörper kann der Zusatzventilsitz geöffnet und verschlossen werden.

Weiter vorteilhaft kann das Entlüftungsventil einen mit dem Drucksteueranschluss verbundenen Steuerraum aufweisen. Vorzugsweise ist der Verschlusskörper auf einer dem Steuerraum abgewandten Seite des Kolbens angeordnet. In einer ersten bevorzugten Ausführungsform ist das Entlüftungsventil als 3/2-Wege-Relaisventil ausgebildet. In dieser Ausführungsform ist der Steuerventil-Entlüftungs-Anschluss, der über das Entlüftungsventil schaltbar ist, schaltbar mit dem Entlüftungsanschluss der Druckluftversorgungsanlage verbindbar oder von diesem trennbar.

Alternativ zu der Ausführungsform des Entlüftungsventils als 3/2-Wege-Relaisventil kann das Entlüftungsventil als 6/2-Wege-Relaisventil ausgebildet sein. In dieser alternativen Ausführungsform ist der Steuerventil-Entlüftungs-Anschluss, der über das Entlüftungsventil schaltbar ist, schaltbar mit dem Umgebungsanschluss verbindbar oder von dem Umgebungsanschluss trennbar. Der Entlüftungsanschluss und der Umgebungsanschluss sind vorzugsweise verschiedene Entlüftungsanschlüsse zur Umgebung.

Es hat sich als vorteilhaft herausgestellt, dass bei betätigtem Entlüftungsventil der Druckluftanschluss zum Entlüftungsanschluss geöffnet ist. Vorteilhafterweise ist bei betätigtem Entlüftungsventil der Steuerventil-Entlüftungs-Anschluss zum Umgebungsanschluss geschlossen.

Erfindungsgemäß ist der Steuerventil-Entlüftungs-Anschluss vom Steuerventil-Anschluss verschieden. Die Steuer-Entlüftungsleitung kann von der Entlüftungsleitung verschieden sein.

Es hat sich als vorteilhaft herausgestellt, wenn die pneumatische Steuerleitung, insbesondere zwischen dem Steuerventil und dem Druckluftanschluss, frei von einem Rückschlagventil ist.

In einer weiteren bevorzugten Ausführungsform ist ein Resthaltedruck des Entlüftungsventils durch eine, insbesondere variabel einstellbare Entlüftungsventil-Feder des Entlüftungsventils vorgebbar.

Die Aufgabe wird ebenfalls gelöst durch ein pneumatisches System mit einer vorbeschriebenen Druckluftversorgungsanlage und einer Pneumatikanlage. Die Pneumatikanlage ist vorzugsweise eine Pneumatikanlage in Form einer Luftfederanlage, die eine Galerie und wenigstens eine an der Galerie pneumatisch angeschlossenen Balg- und/oder Speicher-Zweigleitung aufweist, wobei die angeschlossene Balg- und/oder Speicher-Zweigleitung einen Balg und/oder einen Druckspeicher aufweist, wobei dem Balg und/oder dem Druckspeicher jeweils ein Wegeventil vorgeordnet ist.

Bezüglich des Verfahrens wird die Aufgabe gelöst durch ein Verfahren zum Steuern einer vorbeschriebenen Druckluftversorgungsanlage zum Betreiben einer Pneumatikanlage, insbesondere einer Luftfederanlage eines Fahrzeugs, wobei das Verfahren, in einem Liftachs-Entlüftungsbetrieb, die Schritte aufweist:
- kurzzeitiges Bestromen des Steuerventils und dadurch Öffnen des in der Entlüftungsleitung angeschlossenen Entlüftungsventils, wodurch der Steuerventil-Entlüftungs-Anschluss zur Umgebung geschlossen und dadurch ein Steuerdruck im Steuerraum eingeschlossen und das Steuerventil offengehalten wird;
- vollständiges Entlüften der Pneumatikanlage auf Atmosphärendruck, insbesondere aller Bälge, über den Druckluftanschluss und/oder über eine den Druckluftanschluss mit der Pneumatikanlage verbindenden Versorgungsleitung, wobei das Entlüftungsventil offen und der Druckluftanschluss drucklos verbleibt;
- erneutes kurzzeitiges Bestromen des Steuerventils und dadurch Entlüften des im Steuerraum eingeschlossenen Steuerdrucks in den drucklosen Druckluftanschluss und Schließen des Entlüftungsventils.

Alternativ oder zusätzlich weist das Verfahren, in einem Restdruck-Entlüftungsbetrieb die Schritte auf:
- Aktivieren des Bestromens des Steuerventils und dadurch Öffnen des in der Entlüftungsleitung angeschlossenen Entlüftungsventils, wobei der Steuerventil-Entlüftungs-Anschluss zur Umgebung geschlossen, und vorzugsweise der Steuerraum mit dem Druckluftanschluss verbunden wird, und dadurch ein Steuerdruck in den Steuerraum eingespeist und das Steuerventil offengehalten wird, wobei der Steuerraum vorzugsweise mit dem Druckluftanschluss verbunden bleibt;
- Entlüften der Pneumatikanlage, insbesondere aller Bälge, über den Druckluftanschluss und vorzugsweise weiter über die pneumatische Hauptleitung, die Druckluftzuführung, die Entlüftungsleitung und/oder den Entlüftungsanschluss oder den Umgebungsanschluss, wobei im Zuge des Unterschreitens eines Resthaltedrucks im Druckluftanschluss das Entlüftungsventil geschlossen und so ein erwünschter Restdruck im Druckluftanschluss gehalten wird;
- Deaktivieren des Bestromens des Steuerventils.

Durch die Betriebsmodi Liftachs-Entlüftungsbetrieb sowie Restdruck-Entlüftungsbetrieb ist es möglich, dass ein und dieselbe erfindungsgemäße Druckluftversorgungsanlage durch geeignetes Bestromen des Steuerventils unterschiedliche Entlüftungsbetriebe bereitstellen kann. Im Liftachs-Entlüftungsbetrieb ist lediglich ein zweimaliges kurzzeitiges Bestromen des Steuerventils erforderlich, um die Pneumatikanlage über den Druckluftanschluss restlos zu entlüften. Ein Dauerbestromen des Steuerventils hingegen bewirkt bei ein und derselben Druckluftversorgungsanlage einen Restdruck-Entlüftungsbetrieb, bei dem ein erwünschter Restdruck im Druckluftanschluss gehalten wird.

Ausführungsbeispiele der Erfindung werden nun nachfolgend anhand der Zeichnung im Vergleich zum Stand der Technik, welcher zum Teil ebenfalls dargestellt ist, beschrieben. Diese soll die Ausführungsbeispiele nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Weitere Vorteile, Merkmale und Einzelheiten der Erfindung ergeben sich aus der nachfolgenden Beschreibung der bevorzugten Ausführungsbeispiele, sowie anhand der Zeichnungen; diese zeigt im Einzelnen in:
Fig. 1 eine bevorzugte Ausführungsform eines pneumatischen Systems mit einer Druckluftversorgungsanlage und einer Pneumatikanlage, wobei eine Ventilanordnung mit einem Steuerventil zur Steuerung eines Entlüftungsventils vorgesehen ist;
Fig. 2 eine bevorzugte Ausführungsform eines Teils einer Druckluftversorgungsanlage, wobei eine Ventilanordnung mit einem Steuerventil zur Steuerung eines Entlüftungsventils vorgesehen ist;
Fig. 3 eine bevorzugte Ausführungsform eines Teils einer Druckluftversorgungsanlage, wobei eine Ventilanordnung mit einem Steuerventil zur Steuerung eines Entlüftungsventils vorgesehen ist;
Fig. 3a eine nicht von der beanspruchten Erfindung abgedeckte Ausführungsform eines Teils einer Druckluftversorgungsanlage, wobei eine Ventilanordnung mit einem Steuerventil zur Steuerung eines Entlüftungsventils vorgesehen ist;
Fig. 4 eine schematische Schnittdarstellung durch eine bevorzugte Ausführungsform einer Ventilanordnung;
Fig. 5 ein Ablaufdiagramm zur Darstellung einer bevorzugten Steuerfunktionalität;

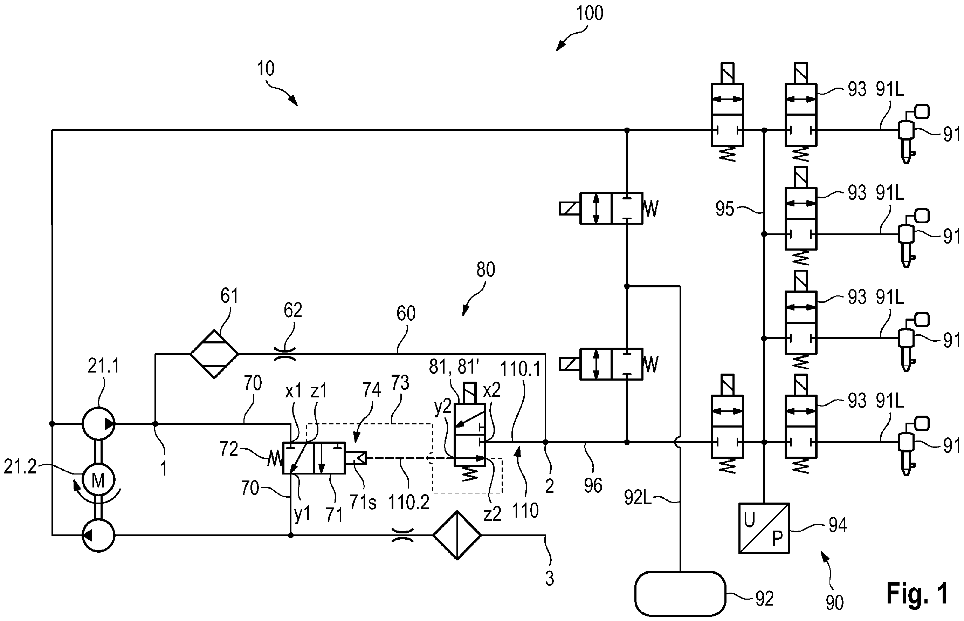

Fig. 1 zeigt eine bevorzugte Ausführung eines pneumatischen Systems 100 mit einer Druckluftversorgungsanlage 10 und einer Pneumatikanlage 90. Die Druckluftversorgungsanlage 10 weist eine Druckluftzuführung 1, einen Druckluftanschluss 2 zur Pneumatikanlage 90 sowie einen Entlüftungsanschluss 3 zur Umgebung auf. Ferner umfasst die Druckluftversorgungsanlage 10 eine pneumatische Hauptleitung 60 zwischen der Druckluftzuführung 1 und dem Druckluftanschluss 2, die pneumatische Hauptleitung 60 weist einen Lufttrockner 61 sowie eine Drossel 62 auf. Eine Entlüftungsleitung 70 der Druckluftversorgungsanlage 10 verläuft zwischen dem Druckluftanschluss 2 und dem Entlüftungsanschluss 3. Die Pneumatikanlage 90 ist mit dem Druckluftanschluss 2 über eine Versorgungsleitung 96 verbunden.

Die Druckluftversorgungsanlage 10 weist ebenfalls eine Ventilanordnung 80 mit einem Steuerventil 81, das als Magnetventil 81' bereitgestellt ist, zur Steuerung eines Entlüftungsventils 71 auf. Im vorliegend dargestellten Ausführungsbeispiel ist das Steuerventil als 3/2-Wegeventil ausgebildet.

Das Steuerventil ist mit einem Steuerventil-Anschluss X2, Y2 in einer an einem Drucksteueranschluss 71S des Entlüftungsventils 71 angeschlossenen, pneumatischen Steuerleitung 110 angeschlossen. Das Entlüftungsventil 71 ist mit einem Entlüftungs-Ventilanschluss X1, Y1 in die Entlüftungsleitung 70 angeschlossen.

Erfindungsgemäß weist das Steuerventil 81 einen Steuerventil-Entlüftungs-Anschluss Z2 auf, der über das Entlüftungsventil 71 schaltbar mit dem Entlüftungsanschluss 3 verbindbar und von diesem trennbar ist.

Wie der Fig. 1 entnommen werden kann, ist eine Steuer-Entlüftungsleitung 73 vorgesehen, die mit einem Entlüftungseingangsanschluss des Entlüftungsventils verbunden ist. Der Entlüftungseingangsanschluss Z1 ist vom Drucksteueranschluss 71S verschieden.

Auf der rechten Seite der Fig. 1 gut erkennbar ist eine Pneumatikanlage 90 in Form einer Luftfederanlage eines Fahrzeugs bereitgestellt. Die Pneumatikanlage 90 weist eine Galerie 95 auf, von der, jeweils pneumatisch trennbar durch ein Wegeventil 93, eine Balg-Zweigleitung angeschlossen ist, die zu jeweils einem Balg 91 führt. Mit der Galerie 95 verbunden ist ein Drucksensor 94. Die Pneumatikanlage 90 weist ebenfalls einen Druckspeicher 92 auf, der über eine Speicher-Zweigleitung 92 angeschlossen ist.

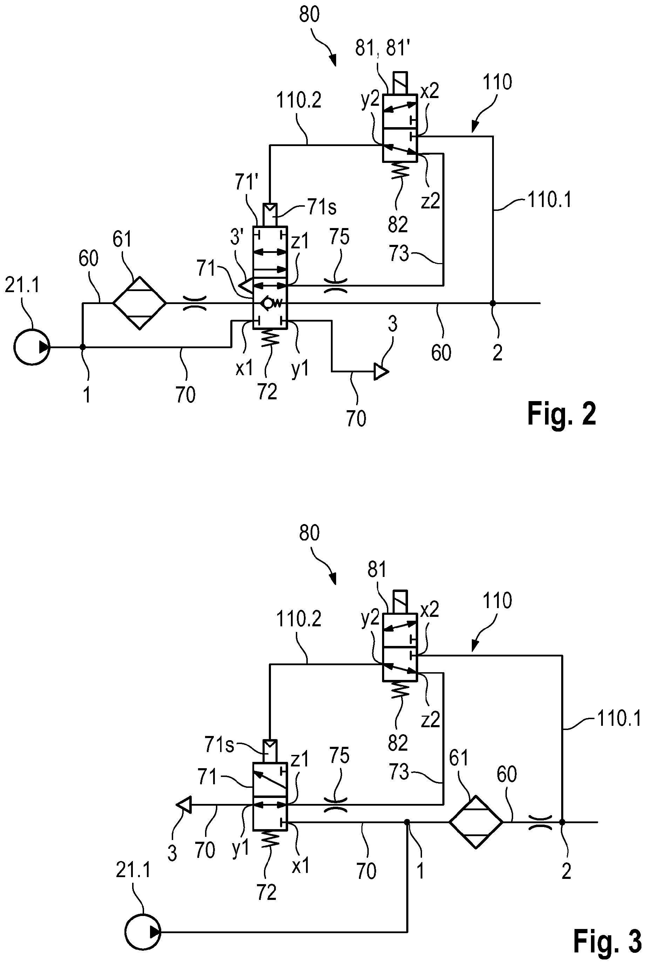

Fig. 2 zeigt einen Teil einer bevorzugten Ausführungsform einer Druckluftversorgungsanlage 10, die beispielsweise an eine Pneumatikanlage 90 (vergleiche Fig. 1) angeschlossen werden kann. Die in Fig. 2 gezeigte Ausführungsform symbolisiert eine sogenannte Power Release Anordnung, bei der das Entlüftungsventil 71 als 6/2-Wege-Relaisventil ausgebildet ist.

Die Druckluftversorgungsanlage 10 weist eine Druckluftzuführung 1 auf, die durch einen Kompressor 21.1 mit Druckluft versorgt wird. Ebenfalls weist die Druckluftversorgungsanlage 10 einen Druckluftanschluss 2 zur Pneumatikanlage (vergleiche Fig. 1), sowie einen Entlüftungsanschluss 3 zur Umgebung auf. Eine pneumatische Hauptleitung 60 zwischen der Druckluftzuführung 1 und dem Druckluftanschluss 2 weist einen Lufttrockner 61 auf.

Die Druckluftversorgungsanlage 10 verfügt ferner über eine Ventilanordnung 80 mit einem als 3/2-Wegeventil ausgebildetem Steuerventil 81 zur Steuerung des Entlüftungsventils 71.

In Fig. 2 sind das Steuerventil 81, das als Magnetventil 81' bereitgestellt ist, und das Entlüftungsventil 71 im nicht angesteuerten Zustand dargestellt.

Wie ebenfalls der Fig. 2 entnommen werden kann, weist das Steuerventil 81 einen ersten Steuerventilanschluss X2 auf, der über einen ersten Teil 110.1 einer pneumatischen Steuerleitung 110 mit dem Druckluftanschluss 2 verbunden ist. Ebenfalls weist das Steuerventil 81 einen zweiten Steuerventilanschluss Y2 auf, über den das Steuerventil 81 über einen zweiten Teil 110.2 der pneumatischen Steuerleitung 110 mit einem Drucksteueranschluss 71S des Entlüftungsventils 71 verbunden ist. Erfindungsgemäß weist das Steuerventil 81 einen Steuerentlüftungsventilanschluss Z2 auf, der über das Entlüftungsventil 71 schaltbar mit einem Umgebungsanschluss 3' verbindbar und von dem Umgebungsanschluss 3' trennbar ist. Der Umgebungsanschluss 3' ist von dem Entlüftungsanschluss 3 verschieden, kann aber auch, in bevorzugten Ausführungsformen, identisch sein.

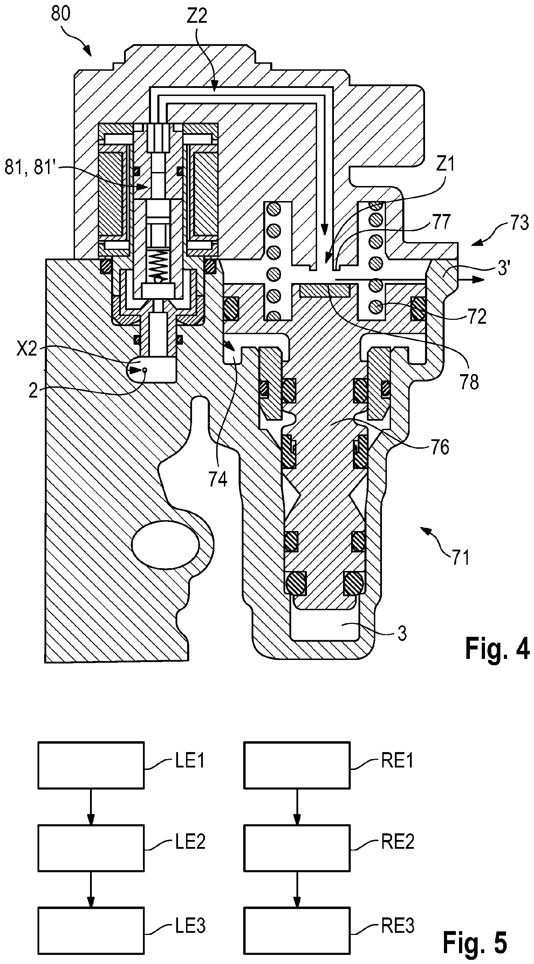

Mit der in Fig. 2 gezeigten Anordnung ist es möglich, den Drucksteueranschluss 71S, der zu einem Steuerraum (vergleiche Fig. 4 Steuerraum 74) führt, über den zweiten Teil 110.2 der pneumatischen Steuerleitung und eine Steuerentlüftungsleitung, die den Steuerentlüftungsventilanschluss mit dem Entlüftungseingangsanschluss Z1 des Entlüftungsventils 71 verbindet, zum Umgebungsanschluss 3' zu entlüften.

Im in Fig. 2 gezeigten Zustand ist das Entlüftungsventil 71 geschlossen, das heißt der erste Entlüftungsventilanschluss X1 ist vom zweiten Entlüftungsventilanschluss Y1 pneumatisch getrennt. Eine über die Druckluftzuführung 1 bereitgestellte Druckluft wird über die Hauptleitung 60 durch den Lufttrockner hindurch in Richtung des Druckluftanschlusses 2 geführt. Der erste Teil 110.1 der pneumatischen Steuerleitung 110 ist nicht mit dem zweiten Teil 110.2 der pneumatischen Steuerleitung 110 verbunden.

Wie ebenfalls der Fig. 2 entnommen werden kann weist die Steuerentlüftungsleitung 73 eine Drossel 75 auf. Ebenfalls erkennbar in Fig. 2 ist, dass der vom Drucksteueranschluss 71S verschiedene Entlüftungseingangsanschluss Z1 druckunabhängig mit dem Steuerentlüftungsventilanschluss Z2 verbunden ist, nämlich über die Steuerentlüftungsleitung 73.

Im Folgenden soll nun die Betätigungsfunktion der in Fig. 2 gezeigten Druckluftversorgungsanlage 10 genauer beschrieben werden. Wird eine druckbehaftete Galerie (vergleiche beispielsweise Galerie 95 in Fig. 1) zum Druckluftanschluss 2 hin geöffnet, so liegt am ersten Steuerventilanschluss X2 ein Druck an der allerdings nicht zum zweiten Steuerventilanschluss durchgeschaltet ist. Durch Betätigen des Steuerventils 81 wird der erste Steuerventilanschluss X2 zum zweiten Steuerventilanschluss Y2 durchgeschaltet. Ausgehend vom zweiten Steuerventilanschluss Y2 gelangt die Druckluft über den zweiten Teil 110.2 der pneumatischen Steuerleitung 110 zum Drucksteueranschluss 71S des Entlüftungsventils. Sobald die über den Drucksteueranschluss 71S in den Steuerraum (vergleiche Fig. 4) eingebrachte Druckluft eine Druckkraft erzeugt, die die entgegenwirkende Federkraft einer Entlüftungsventil-Feder 72 übersteigt wird das Entlüftungsventil 71, 71' in den betätigten Zustand umgeschaltet.

Bei betätigtem Entlüftungsventil 71, 71' ist der Druckluftanschluss 2 zum Entlüftungsanschluss 3 geöffnet. Hingegen ist der Steuerentlüftungsventilanschluss Z2 zum Umgebungsanschluss 3' verschlossen. Wird nun die Bestromung des Steuerventils 81 aufgehoben, so gelangt das Steuerventil 81 in die in Fig. 2 gezeigte Stellung, in der der zweite Steuerventilanschluss Y2 über die Steuerentlüftungsleitung 73 und die Drossel 75 mit dem Entlüftungseingangsanschluss Z1 des Entlüftungsventils 71 verbunden ist. Das Entlüftungsventil 71 verbleibt allerdings in betätigtem Zustand, da der Steuerentlüftungsventilanschluss Z2 über das Entlüftungsventil 71 selbst zum Umgebungsanschluss 3' geschlossen verbleibt. Mit anderen Worten verbleibt der im Steuerraum des Entlüftungsventils 71 befindliche Öffnungsdruck im Steuerraum, da dieser nicht über die Steuerentlüftungsleitung entlüftet werden kann. Es kann somit ein vollständiges Entlüften der Pneumatikanlage, beispielsweise aller Bälge 91 der in Fig. 1 gezeigten Pneumatikanlage 90 über den Druckluftanschluss 2 erfolgen. Nach diesem Entlüftungsvorgang verbleibt der Druckluftanschluss 2 drucklos.

Ein erneutes kurzzeitiges Bestromen des Steuerventils 81 führt dazu, dass der zweite Steuerventilanschluss Y2 mit dem ersten Steuerventilanschluss X2 pneumatisch verbunden wird und dadurch eine Druckluft aus dem Steuerraum des Entlüftungsventils 71 über den Druckluftsteueranschluss, den zweiten Teil 110.2 und den ersten Teil 110.1 der pneumatischen Steuerleitung 110 zum Druckluftanschluss 2 entweichen und über den Entlüftungsanschluss 3 abgebaut werden kann, woraufhin das Entlüftungsventil 71, 71' wieder schließt.

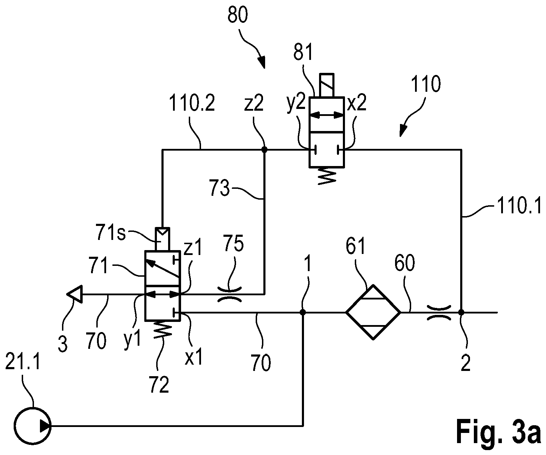

Fig. 3 zeigt ein zur Fig. 2 alternatives Ausführungsbeispiel der erfindungsgemäßen Druckluftversorgungsanlage 10. Alternativ ist in der in Fig. 3 dargestellten sogenannten Quick Release Anordnung das Entlüftungsventil 71 nicht wie in Fig. 2 als 6/2-Wege-Relaisventil, sondern als 3/2- Wege-Relaisventil ausgebildet.

Im in Fig. 3 gezeigten Zustand ist das Entlüftungsventil 71 geschlossen, das heißt der erste Entlüftungsventilanschluss X1 und der zweite Entlüftungsventilanschluss Y1 sind pneumatisch voneinander getrennt, so dass kein Druck vom Druckluftanschluss über den Lufttrockner und die Entlüftungsleitung zum Entlüftungsanschluss 3 gelangen kann.

Wird das Steuerventil 81, das als Magnetventil 81' bereitgestellt ist, kurzzeitig bestromt, so gelangt eine Druckluft vom Druckluftanschluss 2 über den nun miteinander verbundenen ersten und zweiten Steuerventilanschluss X2, Y2 des Magnetventils 81 zum Drucksteueranschluss 71S des Entlüftungsventils 71. Der zweite Steuerventilanschluss Y2 ist zum Steuerentlüftungsventilanschluss Z2 des Steuerventils 81 bei angesteuertem Steuerventil 81 verschlossen, so dass kein Druck aus dem Drucksteueranschluss 71S zum Entlüftungsanschluss 3 gelangen kann. Ist der Steuerdruck des Entlüftungsventils 71 ausreichend groß, so öffnet dieses gegen die Federkraft der Entlüftungsventil-Feder 72, wodurch der erste Entlüftungsventilanschluss X1 mit dem zweiten Entlüftungsventilanschluss Y1 verbunden wird und so eine Druckluft vom Druckluftanschluss 2 zum Entlüftungsanschluss 3 entweichen kann. Gleichzeitig kann keine Druckluft über den Drucksteueranschluss 71S und die Steuerentlüftungsleitung 73 zum Entlüftungsanschluss gelangen, da dieser durch das Entlüftungsventil 71 selbst vom Entlüftungsanschluss 3 getrennt ist. Ist ein Liftachsentlüftungsbetrieb erwünscht, so wird das Steuerventil 81 nur kurzzeitig bestromt, das heißt nur so lange, bis das Entlüftungsventil 71 öffnet. Danach kann ein Bestromen des Steuerventils 81 entfallen, da durch das Entlüftungsventil 71 selbst ein Entlüften des Steuerraums über den Drucksteueranschluss 71S verhindert wird. Eine an den Druckluftanschluss 2 angeschlossene Pneumatikanlage (vergleiche beispielsweise Pneumatikanlage der Fig. 1) kann vollständig entlüftet werden. Durch erneutes kurzzeitiges Bestromen des Steuerventils wird schließlich der Steuerraum über den Drucksteueranschluss 71S und die dann miteinander verbundenen ersten und zweiten Ventilsteuerventilanschlüsse X2 und Y2 zum Entlüftungsanschluss 3 entlüftet.

Ist es hingegen erwünscht, einen Restdruck im Druckluftanschluss 2 zu halten (Restdruckentlüftungsbetrieb), so wird das Steuerventil 81 dauerbestromt. Mit anderen Worten sind die ersten und zweiten Steuerventilanschlüsse X2 und Y2 miteinander verbunden. Zunächst wird dann der vergleichsweise hohe Druck im Druckluftanschluss 2 über das Entlüftungsventil 71 zum Entlüftungsanschluss 3 geführt. Sobald der Druck im Druckluftanschluss eine Resthaltedruckschwelle unterschreitet (Druckausgleich über die geöffnete Steuerleitung 110), fällt das Entlüftungsventil 71 in seinen geschlossenen Zustand. Ein erwünschter Restdruck ist über die vorzugsweise verstellbar ausgebildete Entlüftungsventil-Feder 72 definiert.

Fig. 3a zeigt eine nicht von der beanspruchten Erfindung abgedeckte Ausführungsform eines Teils einer Druckluftversorgungsanlage, wobei eine Ventilanordnung 80 mit einem Steuerventil 81, das als Magnetventil 81' bereitgestellt ist, zur Steuerung eines Entlüftungsventils 71 vorgesehen ist.

Im Gegensatz zu den in Fig. 2 und 3 gezeigten Ausführungsformen, ist bei der Ausführungsform der Fig. 3a der dem Steuerventil 81 zugeordnete Steuerventil-Entlüftungs-Anschluss Z2 nicht Teil des Steuerventils 81. Vielmehr ist das Steuerventil 81 als 2/2-Wegeventil ausgebildet und der dem Steuerventil 81 zugeordnete Steuerventil-Entlüftungs-Anschluss Z2 ist dauerhaft mit dem Drucksteueranschluss 71S des Entlüftungsventils 71 verbunden, in der vorliegenden Ausführungsform über den zweiten Teil 110.2 der Steuerleitung 110. Der dem Steuerventil 81 zugeordnete Steuerventil-Entlüftungs-Anschluss Z2 ist über das Steuerventil 81 schaltbar mit dem Druckluftanschluss 2 verbunden. Genauer gesagt ist der Steuerventil-Entlüftungs-Anschluss Z2 dauerhaft mit dem zweiten Steuerventilanschluss Y2 verbunden. Durch Betätigen des Steuerventils 81 wird der erste Steuerventilanschluss X2 zum zweiten Steuerventilanschluss Y2 durchgeschaltet und so der Steuerventil-Entlüftungs-Anschluss Z2 mit dem Druckluftanschluss 2 verbunden.

Fig. 4 zeigt schematisch einen Schnitt durch eine bevorzugte Ausführungsform einer Ventilanordnung 80. Pneumatisch entspricht die in Fig. 4 gezeigte Ausführungsform dem Schaltbeispiel der Fig. 2, das heißt insbesondere, dass das Entlüftungsventil 71 als 6/2-Wege-Relaisventil ausgebildet ist. Aufgrund der gezeigten Schnittdarstellung sind nicht alle Druckluftleitungen erkennbar; das wesentliche Prinzip der Druckluftversorgungsanlage 10 ist hingegen gut dargestellt.

Wie der Fig. 4 entnommen werden kann, weist das Entlüftungsventil 71 einen Entlüftungseingangsanschluss Z1, der druckunabhängig mit einem Steuerentlüftungsventilanschluss Z2 des Steuerventils 81 (Magnetventil) verbunden ist. Der Entlüftungseingangsanschluss Z1 ist in der vorliegend dargestellten Ausführungsform als Zusatzventilsitz 77 ausgebildet. Das Entlüftungsventil 71 weist einen Kolben 76 mit einem daran angeordneten Verschlusskörper 78 auf, über den der Zusatzventilsitz 77 geöffnet und geschlossen werden kann.

Das Entlüftungsventil 71 weist einen Steuerraum 74 auf, der mit dem Drucksteueranschluss 71S (vergleiche Fig. 2) verbunden ist. Der Verschlusskörper 78 ist auf einer dem Steuerraum 74 abgewandten Seite des Kolbens 76 angeordnet.

Im Folgenden soll ein Entlüftungsvorgang beschrieben werden. Ein am Druckluftanschluss 2 von Seiten der Pneumatikanlage 90 (vergleiche Fig. 1) anliegender Druck kann nicht zum Entlüftungsanschluss 3 entweichen, da das Entlüftungsventil 71 (die in Fig. 4 gezeigte Stellung des Kolbens 76) zum Entlüftungsanschluss 3 geschlossen ist. Durch Betätigung des Steuerventils 81 wird der erste und zweite Steuerventilanschluss X2, Y2 miteinander verbunden, so dass Druckluft vom Druckluftanschluss 2 in den Steuerraum 74 des Entlüftungsventils 71 gelangen kann. Überschreitet die Druckkraft im Steuerraum 74 die Kraft der entgegengesetzt wirkenden Entlüftungsventil-Feder 72, so wird der Kolben 76 in der in Fig. 4 gezeigten Ausführungsform nach oben bewegt, wodurch der Verschlusskörper 78 auf den Zusatzventilsitz 77 gepresst wird. Dadurch wird der Entlüftungseingangsanschluss Z1 zum Umgebungsanschluss 3' verschlossen, so dass der Steuerraum 74 nicht zum Umgebungsanschluss 3' entlüftet werden kann; mit anderen Worten wird ein Steuerdruck im Steuerraum 74 eingeschlossen.

Es sei angemerkt, dass die in Fig. 4 dargestellte konstruktive Lösung sowohl einen Liftachsentlüftungsbetrieb, als auch einen Restdruckentlüftungsbetrieb ermöglicht. Wie bereits mit Bezug auf die Figuren 2 und 3 beschrieben ist es dafür lediglich erforderlich, ein jeweils anderes Ansteuerschema für das Steuerventil 81 zu wählen.

Fig. 5 zeigt schließlich ein Ablaufdiagramm zur Darstellung bevorzugter Steuerfunktionalitäten. Sowohl der in den Verfahrensschritten LE1 bis LE3 gefasste Liftachsentlüftungsbetrieb, als auch der in den Verfahrensschritten RE1 bis RE3 gefasste (alternative) Restdruck-Entlüftungsbetrieb können durch ein und dieselbe erfindungsgemäße Druckluftversorgungsanlage, insbesondere durch das bevorzugte Ausführungsbeispiel der Fig. 4 realisiert werden. In einem ersten Verfahrensschritt LE1 des Liftachsentlüftungsbetriebs erfolgt ein kurzzeitiges Bestromen des Steuerventils 81 und dadurch Öffnen des in der Entlüftungsleitung 70 angeschlossenen Entlüftungsventils 71. Der Steuerentlüftungsventilanschluss Z2 wird dadurch zur Umgebung 3' geschlossen und dadurch ein Steuerdruck im Steuerraum 74 eingeschlossen. Das Steuerventil 81 wird offen gehalten. Unter einem kurzzeitigen Bestromen wird insbesondere ein Zeitraum verstanden, der erforderlich ist um das Entlüftungsventil 71 zu öffnen. Dieser Zeitraum eines kurzzeitigen Bestromens hängt selbstverständlich von den Druckverhältnissen, beziehungsweise der Dimensionierung des Steuerraums und der Entlüftungsventil-Feder ab.

In einem anschließenden zweiten Schritt LE2 erfolgt ein vollständiges Entlüften der Pneumatikanlage, insbesondere aller Bälge 91 der in Fig. 1 gezeigten Pneumatikanlage, über den Druckluftanschluss 2 zum Entlüftungsanschluss 3. Das Entlüftungsventil 71 verbleibt offen; das vollständige Entlüften endet, wenn der Druckluftanschluss 2 drucklos verbleibt.

In einem sich anschließenden dritten Schritt LE3 erfolgt ein erneutes kurzzeitiges Bestromen des Steuerventils 81. Dadurch wird der Steuerraum 74, genauer gesagt der im Steuerraum 74 eingeschlossene Steuerdruck, in den drucklosen Druckluftanschluss 2 entlüftet. Dadurch schließt sich das Entlüftungsventil 71, bewirkt durch die Federkraft der Entlüftungsventil-Feder 72.

Die auf der rechten Seite der Fig. 5 gezeigten Verfahrensschritte RE 1 bis RE3 bezeichnen einen Restdruckentlüftungsbetrieb, der zusätzlich, vorzugsweise aber alternativ zum Liftachsentlüftungsbetrieb durchgeführt wird.

In einem ersten Schritt RE 1 wird ein Bestromen des Steuerventils 81 aktiviert und dadurch ein Öffnen des in der Entlüftungsleitung 70 angeschlossenen Entlüftungsventils 71 erreicht. Der Steuerentlüftungsventilanschluss Z2 wird von Y2 getrennt und wird zur Umgebung 3' geschlossen und dadurch ein Steuerdruck im Steuerraum 74 eingeschlossen. Das Steuerventil 81 wird offen gehalten.

Der Teilschritt des Trennens des Steuerentlüftungsventilanschluss Z2 von dem Steuer-Ventilanschluss kann entfallen, wenn, dies ist aus Fig. 3a ersichtlich, das Steuerventil 81 als 2/2-Wegeventil ausgebildet ist und der dem Steuerventil 81 zugeordnete Steuerventil-Entlüftungs-Anschluss Z2 dauerhaft mit dem Drucksteueranschluss 71S des Entlüftungsventils 71 verbunden ist. Dies ist jedoch nicht Teil der beanspruchten Erfindung.

In einem zweiten Schritt RE 2 erfolgt ein Entlüften der Pneumatikanlage, insbesondere aller Bälge 91 der in Fig. 1 gezeigten Pneumatikanlage und des Steuerraums über den Druckluftanschluss 2. Im Zuge des Unterschreitens eines Resthaltedrucks im Druckluftanschluss 2 wird das Entlüftungsventil 71 aufgrund der Entlüftungsventil-Feder 72 geschlossen und so ein erwünschter Restdruck im Druckluftanschluss 2 gehalten.

In einem anschließenden dritten Schritt RE 3 wird schließlich das Steuerventil 81 stromlos geschaltet. Infolgedessen wird der Steuerraum 74 bzw. der Drucksteueranschluss 71S über den Steuerventil-Anschluss Y2 und den Steuerventil-Entlüftungs-Anschluss Z2, die nun verbunden sind, weiter über die Steuer-Entlüftungsleitung 73 und die Drossel 75 und schließlich über den Entlüftungseingangsanschluss Z1 und den Entlüftungsventilanschluss Y1, die nun verbunden sind, "restentleert", so dass sichergestellt ist, dass der Steuerraum 74 drucklos ist.

### Bezugszeichenliste

- 1: Druckluftzuführung
- 2: Druckluftanschluss
- 3: Entlüftungsanschluss
- 3': Umgebungsanschluss
- 10: Druckluftversorgungsanlage
- 60: Hauptleitung
- 61: Lufttrockner
- 70: Entlüftungsleitung
- 71: Entlüftungsventil
- 71S: Drucksteueranschluss
- 72: Entlüftungsventil-Feder
- 73: Steuer-Entlüftungsleitung
- 74: Steuerraum
- 75: Drossel
- 76: Kolben
- 77: Zusatzventilsitz
- 78: Verschlusskörper
- 80: Ventilanordnung
- 81: Steuerventil
- 81': Magnetventil
- 90: Pneumatikanlage
- 91: Balg
- 91L, 92L: Balg- und/oder Speicher-Zweigleitung
- 92: Druckspeicher
- 93: Wegeventil
- 95: Galerie
- 96: Versorgungsleitung
- 100: pneumatisches System
- 110: Steuerleitung
- 110.1: erster Teil der Steuerleitung
- 110.2: zweiter Teil der Steuerleitung
- X1, Y1: Entlüftungsventilanschluss
- X2, Y2: Steuerventil-Anschluss
- Z1: Entlüftungseingangsanschluss
- Z2: Steuerventil-Entlüftungs-Anschluss

- LE1,2,3: Verfahrensschritte des Liftachs-Entlüftungsbetriebs
- RE1,2,3: Verfahrensschritte des Resthaltedruck-Entlüftungsbetriebs

## Patentansprüche

1. Druckluftversorgungsanlage (10) zum Betreiben einer Pneumatikanlage (90), insbesondere einer Luftfederanlage eines Fahrzeugs, aufweisend:
- eine Druckluftzuführung (1);
- einen Druckluftanschluss (2) zur Pneumatikanlage (90);
- einen Entlüftungsanschluss (3) zur Umgebung;
- eine pneumatische Hauptleitung (60) zwischen der Druckluftzuführung (1) und dem Druckluftanschluss (2), die einen Lufttrockner (61) aufweist;
- eine Entlüftungsleitung (70) zwischen der Druckluftzuführung (1) und dem Entlüftungsanschluss (3);
- eine Ventilanordnung (80) mit einem Steuerventil (81) zur Steuerung eines Entlüftungsventils (71), wobei das Steuerventil (81) mit einem Steuerventil-Anschluss (X2, Y2) in einer, an einem Drucksteueranschluss (71S) des Entlüftungsventils (71) angeschlossenen, pneumatischen Steuerleitung (110), und das Entlüftungsventil (71) mit einem Entlüftungsventilanschluss (X1, Y1) in der Entlüftungsleitung (70) angeschlossen ist, wobei dem Steuerventil (81) eine Steuerventil-Entlüftungs-Anschluss (Z2) zugeordnet ist, der über das Entlüftungsventil (71) schaltbar mit dem Entlüftungsanschluss (3) oder einem Umgebungsanschluss (3') verbindbar und über das Entlüftungsventil (71) schaltbar von dem Entlüftungsanschluss (3) oder dem Umgebungsanschluss (3') trennbar ist, **dadurch gekennzeichnet, dass** der Steuerventil-Entlüftungs-Anschluss (Z2) vom Steuerventil-Anschluss (X2, Y2) verschieden ist.

2. Druckluftversorgungsanlage nach Anspruch 1, **dadurch gekennzeichnet, dass** das Steuerventil (81) ein Magnetventil (81') ist.

3. Druckluftversorgungsanlage nach Anspruch 1 oder 2, **dadurch gekennzeichnet, dass** das Steuerventil (81) als 3/2-Wegeventil ausgebildet ist.

4. Druckluftversorgungsanlage nach einem der Ansprüche 1 bis 3, **dadurch gekennzeichnet, dass** das Entlüftungsventil (71) einen vom Drucksteueranschluss (71S) verschiedenen Entlüftungseingangsanschluss (Z1) aufweist, der druckunabhängig mit dem Steuerventil-Entlüftungs-Anschluss (Z2) verbunden ist.

5. Druckluftversorgungsanlage nach einem der Ansprüche 1 bis 4, **dadurch gekennzeichnet, dass** der Steuerventil-Entlüftungs-Anschluss (Z2) über eine Steuer-Entlüftungsleitung (73) mit dem Entlüftungsventil (71) verbunden ist.

6. Druckluftversorgungsanlage nach Anspruch 5, **dadurch gekennzeichnet, dass** die Steuer-Entlüftungsleitung (73) eine Drossel (75) aufweist.

7. Druckluftversorgungsanlage nach einem der Ansprüche 4 bis 6, **dadurch gekennzeichnet, dass** der Entlüftungseingangsanschluss (Z1) als Zusatzventilsitz (77) ausgebildet ist und das Entlüftungsventil (71) einen Kolben (76) mit einem daran angeordneten Verschlusskörper (78) aufweist, über den der Zusatzventilsitz (77) geöffnet und geschlossen werden kann.

8. Druckluftversorgungsanlage nach Anspruch 7, **dadurch gekennzeichnet, dass** das Entlüftungsventil (71) einen mit dem Drucksteueranschluss (71S) verbundenen Steuerraum (74) aufweist, wobei der Verschlusskörper (78) auf einer dem Steuerraum (74) abgewandten Seite des Kolbens (76) angeordnet ist.

9. Druckluftversorgungsanlage nach einem der Ansprüche 1 bis 8, **dadurch gekennzeichnet, dass** das Entlüftungsventil (71) als 3/2-Wegeventil ausgebildet ist.

10. Druckluftversorgungsanlage nach einem der Ansprüche 1 bis 8, **dadurch gekennzeichnet, dass** das Entlüftungsventil (71) als 6/2-Wegeventil ausgebildet ist

11. Druckluftversorgungsanlage nach Anspruch 10, **dadurch gekennzeichnet, dass** bei betätigtem Entlüftungsventil (71) der Druckluftanschluss (2) zum Entlüftungsanschluss (3) geöffnet und der Steuerventil-Entlüftungs-Anschluss (Z2) zum Umgebungsanschluss (3') geschlossen ist.

12. Druckluftversorgungsanlage nach einem der Ansprüche 1 bis 11, **dadurch gekennzeichnet, dass** die pneumatische Steuerleitung (110), insbesondere zwischen dem Steuerventil (81) und dem Druckluftanschluss (2) frei von einem Rückschlagventil ist.

13. Druckluftversorgungsanlage nach einem der Ansprüche 1 bis 12, **dadurch gekennzeichnet, dass** ein Resthaltedruck durch eine, insbesondere variabel einstellbare, Entlüftungsventil-Feder (72) des Entlüftungsventils (71) vorgebbar ist.

14. Druckluftversorgungsanlage nach einem der Ansprüche 1 bis 12, **dadurch gekennzeichnet, dass** das Steuerventil (81) den Steuerventil-Entlüftungs-Anschluss (Z2) aufweist.

15. Druckluftversorgungsanlage nach einem der vorhergehenden Ansprüche, mindestens einschließlich Anspruch 5, **dadurch gekennzeichnet, dass** die Steuer-Entlüftungsleitung (73) von der Entlüftungsleitung (70) verschieden ist.

16. Pneumatisches System (100) mit der Druckluftversorgungsanlage (10) nach einem der Ansprüche 1 bis 15 und einer Pneumatikanlage, insbesondere die Pneumatikanlage (90), die in Form einer Luftfederanlage gebildet ist, die eine Galerie (95) und wenigstens eine an die Galerie pneumatisch angeschlossene Balg- und/oder Speicher-Zweigleitung (91L, 92L) aufweist, wobei die angeschlossene Balg- und/oder Speicher-Zweigleitung (91L, 92L) einen Balg (91) und/oder einen Druckspeicher (92) aufweist, wobei dem Balg (91) und/oder dem Druckspeicher (92) jeweils ein Wegeventil (93) vorgeordnet ist.

17. Verfahren zum Steuern einer Druckluftversorgungsanlage (10) nach einem der vorhergehenden Ansprüche zum Betreiben einer Pneumatikanlage (90), insbesondere einer Luftfederanlage eines Fahrzeugs, wobei das Verfahren, in einem Entlüftungsbetrieb, vorzugsweise einem Liftachs-Entlüftungsbetrieb, die Schritte aufweist:
- kurzzeitiges Bestromen des Steuerventils (81) und dadurch kurzzeitiges Öffnen des in der Entlüftungsleitung (70) angeschlossen Entlüftungsventils (71), wodurch der Steuerventil-Entlüftungs-Anschluss (Z2) zur Umgebung (3, 3') geschlossen und dadurch ein Steuerdruck im Steuerraum (74) eingeschlossen und das Entlüftungsventil (71) offengehalten wird;
- vollständiges Entlüften der Pneumatikanlage auf Atmosphärendruck, insbesondere aller Bälge (91), über den Druckluftanschluss (2) und/oder über eine den Druckluftanschluss (2) mit der Pneumatikanlage (90) verbindenden Versorgungsleitung (96), wobei das Entlüftungsventil (71) offen und der Druckluftanschluss (2) drucklos verbleibt;
- erneutes kurzzeitiges Bestromen des Steuerventils (81) und dadurch Entlüften des im Steuerraum (74) eingeschlossenen Steuerdrucks in den drucklosen Druckluftanschluss (2) und Schließen des Entlüftungsventils (71);
und/oder wobei das Verfahren, in einem Resthaltedruck-Entlüftungsbetrieb, die Schritte aufweist:
- Aktivieren des Bestromens des Steuerventils (81) und dadurch Öffnen des in der Entlüftungsleitung (70) angeschlossen Entlüftungsventils (71), wodurch der Steuerventil-Entlüftungs-Anschluss (Z2) zur Umgebung (3') geschlossen und dadurch ein Steuerdruck in den Steuerraum (74) eingespeist und das Entlüftungsventil (71) offengehalten wird;
- Entlüften der Pneumatikanlage, insbesondere aller Bälge (91), über den Druckluftanschluss (2), wobei im Zuge des Unterschreitens eines Resthaltedrucks im Druckluftanschluss (2) das Entlüftungsventil (71) geschlossen und so ein erwünschter Resthaltedruck im Druckluftanschluss (2) gehalten wird;
- Deaktivieren des Bestromens des Steuerventils (81).

18. Verfahren nach Anspruch 17, wobei der Steuerventil-Entlüftungs-Anschluss (Z2) durch Umschalten des Entlüftungsventils (71) zur Umgebung (3, 3') geschlossen wird.

## Claims

1. A compressed air supply system (10) for operating a pneumatic installation (90), in particular an air spring unit of a vehicle, comprising:
- a compressed-air feed (1);
- a compressed air connection (2) to the pneumatic system (90);
- a ventilation connection (3) to the environment;
- a pneumatic main line (60) between the compressed-air feed (1) and the compressed air connection (2), which comprises an air dryer (61);
- a ventilation line (70) between the compressed-air feed (1) and the ventilation connection (3);
- a valve arrangement (80) with a control valve (81) for controlling a ventilation valve (71), wherein the control valve (81) is connected to a control valve connection (X2, Y2) in a pneumatic control line (110) connected on a pressure control connection (71S) of the ventilation valve (71), and the ventilation valve (71) is connected to a ventilation valve connection (X1, Y1) in the ventilation line (70), wherein a control valve ventilation connection (Z2) is assigned to the control valve (81), said control valve ventilation connection being switchably connectable to the ventilation connection (3) or an environment connection (3') via the ventilation valve (71) and which is switchably separable from the ventilation connection (3) or the environment connection (3') via the ventilation valve (71), **characterized in that** the control valve ventilation connection (Z2) is different from the control valve connection (X2, Y2).

2. The compressed air supply system according to claim 1, **characterized in that** the control valve (81) is a solenoid valve (81').

3. The compressed air supply system according to claim 1 or 2, **characterized in that** the control valve (81) is embodied as a 3/2 way valve.

4. The compressed air supply system according to any of claims 1 to 3, **characterized in that** the ventilation valve (71) has a ventilation input connection (Z1) different from the pressure control connection (71S), which is connected to the control valve ventilation connection (Z2) independently of the pressure.

5. The compressed air supply system according to any of claims 1 to 4, **characterized in that** the control valve ventilation connection (Z2) is connected to the ventilation valve (71) via a control ventilation line (73).

6. The compressed air supply system according to claim 5, **characterized in that** the control ventilation line (73) has a throttle (75).

7. The compressed air supply system according to any of claims 4 to 6, **characterized in that** the ventilation input connection (Z1) is embodied as an auxiliary valve seat (77) and the ventilation valve (71) has a piston (76) with a sealing body (78) arranged thereon, via which the auxiliary valve seat (77) can be opened and closed.

8. The compressed air supply system according to claim 7, **characterized in that** the ventilation valve (71) has a control chamber (74) connected to the pressure control connection (71S), wherein the sealing body (78) is arranged on a side of the piston (76) averted from the control chamber (74).

9. The compressed air supply system according to any of claims 1 to 8, **characterized in that** the ventilation valve (71) is embodied as a 3/2 way valve.

10. The compressed air supply system according to any of claims 1 to 8, **characterized in that** the ventilation valve (71) is embodied as a 6/2 way valve.

11. The compressed air supply system according to claim 10, **characterized in that** in the event of an actuated ventilation valve (71) the compressed air connection (2) to the ventilation connection (3) is opened and the control valve ventilation connection (Z2) to the environment connection (3') is closed.

12. The compressed air supply system according to any of claims 1 to 11, **characterized in that** the pneumatic control line (110), in particular between the control valve (81) and the compressed air connection (2), is free from a check valve.

13. The compressed air supply system according to any of claims 1 to 12, **characterized in that** a residual pressure can be specified by an, in particular variably adjustable ventilation valve spring (72) of the ventilation valve (71).

14. The compressed air supply system according to any of claims 1 to 12, **characterized in that** the control valve (81) has the control valve ventilation connection (Z2).

15. The compressed air supply system according to any of the foregoing claims, including at least claim 5, **characterized in that** the control ventilation line (73) is different from the ventilation line (70).

16. A pneumatic system (100) with the compressed air supply system (10) according to any of claims 1 to 15 and a pneumatic installation, in particular the pneumatic installation (90), which is formed in the form of an air spring unit, which has a gallery (95) and at least one bellows and/or accumulator branch line (91L, 92L) pneumatically connected to the gallery, wherein the connected bellows and/or accumulator branch line (91L, 92L) has a bellows (91) and/or a pressure accumulator (92), wherein in each case a way valve (93) is arranged upstream of the bellows (91) and/or the pressure accumulator (92).

17. A method for controlling a compressed air supply system (10) according to any of the foregoing claims for operating a pneumatic installation (90), in particular an air spring unit of a vehicle, wherein the method, in a ventilation operation, preferably a lift axis ventilation operation, comprises the steps:
- short-term energizing of the control valve (81) and as a result short-term opening of the connected ventilation valve (71) in the ventilation line (70), as a result of which the control valve ventilation connection (Z2) is closed to the environment (3, 3') and as a result a control pressure in the control chamber (74) is enclosed and the ventilation valve (71) is held open;
- complete ventilation of the pneumatic installation at atmospheric pressure, in particular of all bellows (91), via the compressed air connection (2) and/or via a supply line (96) connected the compressed air connection (2) to the pneumatic installation (90), wherein the ventilation valve (71) remains open and the compressed air connection (2) remains pressure-free;
- renewed short-term energizing of the control valve (81) and as a result ventilation of the control pressure enclosed in the control chamber (74) to the pressure-free compressed air connection (2) and closing of the ventilation valve (71);
and/or wherein the method, in a residual pressure ventilation operation, comprises the steps:
- activation of the energization of the control valve (81) and as a result opening of the connected ventilation valve (71) in the ventilation line (70), as a result of which the control valve ventilation connection (Z2) is closed to the environment (3') and as a result a control pressure is fed to the control chamber (74) and the ventilation valve (71) is held open;
- ventilation of the pneumatic installation, in particular of all bellows (91), over the compressed air connection (2), wherein in the course of the falling short of a residual pressure in the compressed air connection (2) the ventilation valve (71) is closed and thus a desired residual pressure is retained in the compressed air connection (2);
- deactivation of the energization of the control valve (81).

18. The method according to claim 17, wherein the control valve ventilation connection (Z2) is closed to the environment (3, 3') by switching the ventilation valve (71).

## Revendications

1. Installation d'alimentation en air comprimé (10) pour faire fonctionner une installation pneumatique (90), en particulier une installation de suspension pneumatique d'un véhicule, présentant :
- une amenée d'air comprimé (1) ;
- un raccord d'air comprimé (2) menant à l'installation pneumatique (90) ;
- un raccord de désaération (3) vers l'environnement ;
- une conduite principale pneumatique (60) entre l'amenée d'air comprimé (1) et le raccord d'air comprimé (2), qui présente un sécheur d'air (61) ;
- une conduite de désaération (70) entre l'amenée d'air comprimé (1) et le raccord de désaération (3) ;
- un ensemble soupape (80) avec une soupape de commande (81) pour commander une soupape de désaération (71), dans laquelle la soupape de commande (81) est raccordée avec un raccord de soupape de commande (X2, Y2) dans une conduite de commande pneumatique (110), raccordée à un raccord de commande de pression (71S) de la soupape de désaération (71), et la soupape de désaération (71) est raccordée avec un raccord de soupape de désaération (X1, Y1) dans la conduite de désaération (70), dans laquelle un raccord de désaération de soupape de commande (Z2), qui peut être relié de manière commutable au raccord de désaération (3) ou à un raccord d'environnement (3') par l'intermédiaire de la soupape de désaération (71) et peut être séparé de manière commutable du raccord de désaération (3) ou du raccord d'environnement (3') par l'intermédiaire de la soupape de désaération (71), est associé à la soupape de commande (81), **caractérisée en ce que** le raccord de désaération de soupape de commande (Z2) est différent du raccord de soupape de commande (X2, Y2).

2. Installation d'alimentation en air comprimé selon la revendication 1, **caractérisée en ce que** la soupape de commande (81) est une électrovanne (81').

3. Installation d'alimentation en air comprimé selon la revendication 1 ou 2, **caractérisée en ce que** la soupape de commande (81) est réalisée sous la forme d'un distributeur à 3/2 voies.

4. Installation d'alimentation en air comprimé selon l'une quelconque des revendications 1 à 3, **caractérisée en ce que** la soupape de désaération (71) présente un raccord d'entrée de désaération (Z1) différent du raccord de commande de pression (71S), qui est relié indépendamment de la pression au raccord de désaération de soupape de commande (Z2).

5. Installation d'alimentation en air comprimé selon l'une quelconque des revendications 1 à 4, **caractérisée en ce que** le raccord de désaération de soupape de commande (Z2) est relié à la soupape de désaération (71) par l'intermédiaire d'une conduite de désaération de commande (73).

6. Installation d'alimentation en air comprimé selon la revendication 5, **caractérisée en ce que** la conduite de désaération de commande (73) présente un étranglement (75).

7. Installation d'alimentation en air comprimé selon l'une quelconque des revendications 4 à 6, **caractérisée en ce que** le raccord d'entrée de désaération (Z1) est réalisé sous la forme d'un siège de soupape additionnel (77) et la soupape de désaération (71) présente un piston (76) avec un corps de fermeture (78) disposé sur celui-ci, par l'intermédiaire duquel le siège de soupape additionnel (77) peut être ouvert et fermé.

8. Installation d'alimentation en air comprimé selon la revendication 7, **caractérisée en ce que** la soupape de désaération (71) présente une chambre de commande (74) reliée au raccord de commande de pression (71S), dans laquelle le corps de fermeture (78) est disposé sur une face du piston (76) opposée à la chambre de commande (74).

9. Installation d'alimentation en air comprimé selon l'une quelconque des revendications 1 à 8, **caractérisée en ce que** la soupape de désaération (71) est réalisée sous la forme d'un distributeur à 3/2 voies.

10. Installation d'alimentation en air comprimé selon l'une quelconque des revendications 1 à 8, **caractérisée en ce que** la soupape de désaération (71) est réalisée sous la forme d'un distributeur à 6/2 voies.

11. Installation d'alimentation en air comprimé selon la revendication 10, **caractérisée en ce que** lorsque la soupape de désaération (71) est actionnée, le raccord d'air comprimé (2) est ouvert par rapport au raccord de désaération (3) et le raccord de désaération de soupape de commande (Z2) est fermé par rapport au raccord d'environnement (3').

12. Installation d'alimentation en air comprimé selon l'une quelconque des revendications 1 à 11, **caractérisée en ce que** la conduite de commande pneumatique (110), en particulier entre la soupape de commande (81) et le raccord d'air comprimé (2), est exempte d'un clapet antiretour.

13. Installation d'alimentation en air comprimé selon l'une quelconque des revendications 1 à 12, **caractérisée en ce qu'**une pression de maintien résiduelle peut être prédéfinie par un ressort de soupape de désaération (72) de la soupape de désaération (71), réglable en particulier de manière variable.

14. Installation d'alimentation en air comprimé selon l'une quelconque des revendications 1 à 12, **caractérisée en ce que** la soupape de commande (81) présente le raccord de désaération de soupape de commande (Z2).

15. Installation d'alimentation en air comprimé selon l'une quelconque des revendications précédentes, au moins la revendication 5 incluse, **caractérisée en ce que** la conduite de désaération de commande (73) est différente de la conduite de désaération (70).

16. Système pneumatique (100) avec l'installation d'alimentation en air comprimé (10) selon l'une quelconque des revendications 1 à 15 et une installation pneumatique, en particulier l'installation pneumatique (90), qui est formée sous forme d'une installation de suspension pneumatique, qui présente une galerie (95) et au moins une conduite de dérivation à soufflet et/ou accumulateur (91L, 92L) raccordée de manière pneumatique à la galerie, dans lequel la conduite de dérivation à soufflet et/ou accumulateur (91L, 92L) raccordée présente un soufflet (91) et/ou un accumulateur de pression (92), dans lequel respectivement un distributeur (93) est situé en amont du soufflet (91) et/ou de l'accumulateur de pression (92).

17. Procédé pour commander une installation d'alimentation en air comprimé (10) selon l'une quelconque des revendications précédentes pour faire fonctionner une installation pneumatique (90), en particulier une installation de suspension pneumatique d'un véhicule, dans lequel le procédé, dans un mode désaération, de préférence un mode désaération d'essieu relevable, présente les étapes :
- d'alimentation momentanée en courant de la soupape de commande (81) et de cette manière d'ouverture momentanée de la soupape de désaération (71) raccordée dans la conduite de désaération (70), moyennant quoi le raccord de désaération de soupape de commande (Z2) est fermé par rapport à l'environnement (3, 3') et de cette manière une pression de commande est renfermée dans la chambre de commande (74) et la soupape de désaération (71) est maintenue ouverte ;
- de désaération complète de l'installation pneumatique à la pression atmosphérique, en particulier de tous les soufflets (91), par l'intermédiaire du raccord d'air comprimé (2) et/ou par l'intermédiaire d'une conduite d'alimentation (96) reliant le raccord d'air comprimé (2) à l'installation pneumatique (90), dans lequel la soupape de désaération (71) reste ouverte et le raccord d'air comprimé (2) fermé ;
- à nouveau d'alimentation momentanée en courant de la soupape de commande (81) et de ce fait de désaération de la pression de commande renfermée dans la chambre de commande (74) dans le raccord d'air comprimé (2) sans pression et de fermeture de la soupape de désaération (71) ;
et/ou dans lequel le procédé, dans un mode désaération de pression de retenue résiduelle, présente les étapes :
- d'activation de l'alimentation en courant de la soupape de commande (81) et de ce fait d'ouverture de la soupape de désaération (71) raccordée dans la conduite de désaération (70), moyennant quoi le raccord de désaération de soupape de commande (Z2) est fermé par rapport à l'environnement (3') et de ce fait une pression de commande est injectée dans la chambre de commande (74) et la soupape de désaération (71) est maintenue ouverte ;
- de désaération de l'installation pneumatique, en particulier de tous les soufflets (91), par l'intermédiaire du raccord d'air comprimé (2), dans lequel au cours du passage au-dessous d'une pression de maintien résiduelle dans le raccord d'air comprimé (2) la soupape de désaération (71) est fermée et ainsi une pression de maintien résiduelle souhaitée est maintenue dans le raccord d'air comprimé (2) ;
- de désactivation de l'alimentation en courant de la soupape de commande (81).

18. Procédé selon la revendication 17, dans lequel le raccord de désaération de soupape de commande (Z2) est fermé par commutation de la soupape de désaération (71) par rapport à l'environnement (3, 3').
